# EUROPÄISCHE PATENTSCHRIFT

(11) **EP 3 991 818 B1**
(45) Veröffentlichungstag und Bekanntmachung des Hinweises auf die Patenterteilung: **29.11.2023**
(21) Anmeldenummer: 21203343.5
(22) Anmeldetag: 19.10.2021
(51) Int. Cl.: A63G 31/00, A63G 31/16, B25J 9/00, B25J 11/00

(54) **VERFAHREN ZUM BETREIBEN EINES FREIZEITPARKS SOWIE FREIZEITPARK**
LEISURE PARK AND METHOD FOR OPERATING A LEISURE PARK
PROCÉDÉ DE FONCTIONNEMENT D'UN PARC D'ATTRACTION, AINSI QUE PARC D'ATTRACTION

(30) Priorität: 28.10.2020 DE 102020128395
(43) Veröffentlichungstag der Anmeldung: 04.05.2022
(73) Patentinhaber: Mack Rides IP GmbH & Co. KG, 79183 Waldkirch (DE)
(72) Erfinder: Roeser, Maximilian, 79379 Vögisheim (DE)
(74) Vertreter: Westphal, Mussgnug & Partner Patentanwälte mbB

(56) Entgegenhaltungen:
- WO-A1-2020/041228
- US-A- 5 490 784
- US-A1- 2014 277 739
- US-A1- 2018 329 480

## Beschreibung

Die vorliegende Erfindung betrifft ein Verfahren zum Betreiben eines Freizeitparks für mindestens einen Besucher und mit mindestens einer Attraktion, wobei für den mindestens einen Fahrgast eine Exoskeletteinheit mit mindestens einer Bewegungseinrichtung zur Erzeugung einer haptische Stimulation bereit gestellt ist, mit den Merkmalen des Patentanspruchs 1 sowie einen Freizeitpark mit mindestens einer Attraktion, insbesondere einen "walk-through" oder einen Darkride, mit den Merkmalen des Patentanspruchs 9.

Aus dem Stand der Technik sind eine Vielzahl von Verfahren zum Betreiben eines Freizeitparks sowie unterschiedliche Freizeitparks vorbekannt, wobei ein Freizeitpark sowohl eine stationäre Einrichtung als auch eine Ansammlung halbstationärer Attraktionen, wie beispielsweise ein Volksfest oder eine Kirmes, sein kann. In dem Stand der Technik erfolgt die Bespaßung der Besucher des Freizeitparks und der mindestens einen Attraktion durch die Attraktion selber und/oder durch Animationen bzw. Events, wobei die Besucher in dem Freizeitpark typischerweise gemäß individueller Interessen den Freizeitpark erkunden und die mindestens eine Attraktion nach Belieben besuchen. Zur Steuerung von Besucherströmen in Freizeitparks werden im Stand der Technik beispielsweise Wartezeiten für die mindestens eine Attraktion angegeben oder Besucher können bestimmte Zeiträume buchen, in denen ein Fahrgeschäft unter Umgehung einer Warteschlange aufgesucht werden kann. Die U 2018 329 480 A1 offenbart ein Verfahren zum Betreiben eines Freizeitparks gemäß dem Oberbegriff des Anspruchs 1.

Weiteren Stand der Technik bilden die US 5 490 784 A, WO 2020 041 228 A1 und US 2014 277 739 A1.

Weiterhin sind Exoskeletteinheiten aus dem Stand der Technik im Allgemeinen als künstliche und technische Stützstrukturen bekannt. Exoskeletteinheiten werden beispielsweise in der Medizin oder der Ergonomie verwendet und können mittels angetriebenen Gelenken die Bewegungen des Benutzers unterstützen oder verstärken.

Ausgehend von diesem Stand der Technik stellt sich die vorliegende Erfindung der Aufgabe, ein Verfahren bereitzustellen, dass die zuvor erläuterten Nachteile der aus dem Stand der Technik bekannten Freizeitparks beseitig, und dem mindestens einen Besucher eines Freizeitparks ein außergewöhnliches Erlebnis mit einem hohen Unterhaltungswert bietet.

Diese Aufgaben werden durch ein Verfahren zum Betreiben eines Freizeitparks mit mindestens einer Attraktion mit den Merkmalen des Patentanspruchs 1 sowie durch einen Freizeitpark mit mindestens einer Attraktion mit den Merkmalen des Patentanspruchs 9 gelöst.

Weitere vorteilhafte Ausgestaltungen der vorliegenden Erfindung werden in den Unteransprüchen angegeben.

Das erfindungsgemäße Verfahren mit den Merkmalen des Patentanspruchs 1 zum Betreiben eines Freizeitparks für mindestens einen Besucher und mit mindestens einer Attraktion, welche bevorzugt einen Parcours aufweist, zeichnet sich dadurch aus, dass für den mindestens einen Besucher eine Exoskeletteinheit mit mindestens einer Bewegungseinrichtung bereitgestellt ist, die dem mindestens einen Besucher eine Bewegung und/oder eine Haltung aufzwingen kann.

Als Freizeitpark wird hier und im Folgenden eine stationäre oder halbstationäre räumliche Einrichtung verstanden, welche mindestens eine Attraktion aufweist. Die mindestens eine Attraktion kann ein Fahrgeschäft, eine Schaubude oder dergleichen sein, wobei mit technischen Mitteln der mindestens eine Besucher bzw. eine Mehrzahl von Besuchern unterhalten werden sollen.

Die Exoskeletteinheit im Zusammenhang mit dieser Erfindung ist eine an dem Körper und oder an der Kleidung des mindestens einen Besuchers anordnenbare Einheit, welche durch technische Mittel eine mechanische Bewegung bzw. eine haptisch wahrnehmbare Stimulation erzeugen kann. Die Exoskeletteinheit kann hierzu mittels Aktoren angetrieben werden und mit Stützeinrichtungen versehen sein und Gelenkbewegungen mindestens eines Körpergliedes wie Arm, Bein, Hand, Finger und/oder Fuß, aber auch von Rücken, Hals und/oder Kopf des mindestens einen Benutzers unterstützen, bremsen, verstärken und/oder erzwingen.

Die vorliegende Erfindung beruht somit auf der Idee, den Besuch eines Freizeitparks als ein Erlebnis mit einer durch die Exoskeletteinheit haptischen Stimulation bzw. aufgezwungenen Haltung und/oder Bewegung zu verknüpfen, wodurch neuartige Erlebniswelten für den mindestens einen Besucher ermöglicht werden. Die Exoskeletteinheit weist hierzu mindestens eine Bewegungseinrichtung auf, die eine haptische Stimulation bzw. eine Bewegung eines durch ein Gelenk beweglichen Körperteils erzeugen bzw. erzwingen kann. Der mindestens eine Besucher erfährt einen besonderen Nervenkitzel, wenn er - insbesondere synchron zu einem Erlebnis in dem Fahrgeschäft oder der Attraktion - zeitweilig die Kontrolle über seinen Körper oder mindestens ein Körperteil verliert und "ferngesteuert" ist.

Gemäß einer Weiterbildung des erfindungsgemäßen Verfahrens ist es vorgesehen, dass die Haltung oder die Bewegung des Besuches erzwungen, gedämpft bzw. gebremst und/oder eine Haltung des Besuchers festgelegt wird. Durch ein Erzwingen einer Bewegung des Besuchers kann zum Beispiel der mindestens eine Besucher aktiv gesteuert bzw. ferngesteuert werden. Der Besucher kann in einem Szenario gezwungen werden, auf einem vorgegebenen Parcours einer Attraktion oder des Freizeitparks zu bleiben, oder gezielt die mindestens eine Attraktion in dem Freizeitpark anzulaufen. Durch das Erzwingen der Bewegung des mindestens einen Besuchers kann eine Optimierung von Besucherströmen erfolgen, wodurch Besucher beispielsweise gezielt zu Attraktionen geführt werden können, die weniger frequentiert besucht werden und/oder einem Wunschprofil des Benutzers entsprechen. Auch kann durch ein gezieltes Festlegen einer Haltung des Besuches der Nervenkitzel gesteigert werden und gleichzeitig die Sicherheit erhöht werden, da physische Reaktionen des Besuchers unterbunden oder gedämpft werden können. Der Besucher kann durch diese Maßnahme beispielsweise näher an das Geschehen einer Attraktion geführt werden, ohne dass in Überraschungsmomenten Gefahr besteht, dass der Besucher wegläuft, um sich schlägt und andere möglicherweise gefährdende physische Reaktionen zeigt. Auch kann der mindestens eine Besucher in das Geschehen einer Attraktion eingebunden werden, in dem ihm Bewegungen aufgezwungen werden, welche bevorzugt - wie nachfolgend noch detailliert erläutert werden wird - mit dem Geschehen der Attraktion synchronisiert sein können.

Erfindungsgemäß kann die Exoskeletteinheit die Bewegung oder Haltung des mindestens einen Besuchers zeitabhängig, in Abhängigkeit der Position und/oder der Ausrichtung des Besuchers und/oder als Folge empfangener Steuerbefehle erzwingen. Die Steuerbefehle können bevorzugter Weise über eine Schnittstelle eines Kommunikationsmittels empfangen werden.

Weiterhin hat es sich als vorteilhaft erwiesen, wenn die Exoskeletteinheit einen ersten Betriebsmodus und mindestens einen zweiten Betriebsmodus aufweist. In dem ersten Betriebsmodus kann die Bewegung oder Haltung unabhängig von einer Körperhaltung, einer Bewegung und/oder eines Bewegungswunsches des mindestens einen Besuchers erzwungen werden und der mindestens eine Besucher hat über die Bewegung oder die Haltung keine Kontrolle. In dem zweiten Betriebsmodus kann die Bewegung und/oder der Bewegungswunsch des mindestens einen Besuchers unterstützt werden.

In diesem Betriebsmodus kann die Ansteuerung der Exoskeletteinheit einer vom Benutzer vorgegebenen Bewegung folgen, wozu eine Sensorik vorgesehen werden kann, die einen Bewegungswunsch des Besuchers erfasst. Beispielsweise kann die Sensorik mindestens einen Drucksensor und/oder mindestens einen Drehmomentsensor, beispielsweise in einem Gelenk der Exoskeletteinheit, umfassen, die eine Bewegung des Benutzers erfassen. Alternativ kann mindestens ein Elektromyogramm-Sensor vorgesehen sein, welcher zur Erfassung einer Bewegung des Benutzers oder eines Bewegungswunsches des Besuchers die Aktivierung eines Muskels oder einer Muskelgruppe erfasst. Die Exoskeletteinheit kann sodann eine der Aktivierung des Muskels entsprechende Bewegung ausführen bzw. unterstützen, bremsen bzw. dämpfen oder hemmen. Alternativ kann die Ansteuerung der Exoskeletteinheit vorgegeben werden, wodurch dem Besucher eine Bewegung aufgezwungen werden kann.

Die Exoskeletteinheit kann es beispielsweise Besuchern mit einer Behinderung ermöglichen, den Freizeitpark normal zu "begehen" bzw. erkunden, ohne auf weitere Bewegungshilfen wie Rollstuhl, Gehhilfe, Rollator oder dergleichen angewiesen zu sein. Die Exoskeletteinheit kann in diesem Fall entweder einer vom Benutzer vorgegebenen Bewegung folgen oder mittels des mindestens einen Elektromyogramm-Sensors einen Bewegungswunsch erfassen. Es ist jedoch auch möglich, die Technik der Exoskeletteinheit Besuchern ohne körperliche Beeinträchtigungen näher zu bringen und ihnen beispielsweise übernatürliche Kräfte als eine Art Technologie-Demonstrator näher zu bringen und gegebenenfalls mittels präsentierter Inhalte ein erweitertes immersives Erlebnis zu präsentieren.

Bevorzugt weist der Freizeitpark und/oder die Attraktion mindestens eine Wiedergabeeinrichtung auf, wobei die Exoskeletteinheit mit der Wiedergabeeinrichtung synchronisierbar ist. Hierzu kann die Exoskeletteinheit über die Schnittstelle der Kommunikationsmittel mit einer Anlagensteuerung und/oder einer Steuereinrichtung das Freizeitparks verbunden sein oder durch eine entsprechende Sensorik auf Signale der Wiedergabeeinrichtung reagieren. Die Wiedergabeeinrichtung kann beispielsweise einen oder mehrere technische Effekte und/oder einen medialen Inhalt bzw. Content wiedergeben. Durch eine Synchronisierung der Wiedergabeeinrichtung mit der mindestens einen Exoskeletteinheit können Effekte und haptische Stimulationen bzw. erzwungene Bewegungen des mindestens einen Besuchers kombiniert werden, wodurch das Bewusstsein des Besuchers mit der Exoskeletteinheit in den Hintergrund tritt und der durch die Wiedergabeeinrichtung dargestellte Inhalt als besonders real empfunden wird.

Die Exoskeletteinheit führt den mindestens einen Besucher mittels eines vorgegebenen Datensatzes zumindest abschnittweise und/oder zeitweise mittels haptischer Stimulationen durch den Freizeitpark und/oder durch die Attraktion. Beispielsweise kann ein Modell des Freizeitparks und/oder der Attraktion in der Exoskeletteinheit, der Anlagensteuerung der Attraktion und/oder der Steuereinrichtung des Freizeitparks hinterlegt sein. Entweder kann der mindestens eine Besucher durch eine Art "Geofence" auf einen Parcours der Attraktion oder des Freizeitparks animiert werden, dem Parcours zu folgen oder zu Durchsatzoptimierung angehalten werden, bestimmte Wegpunkte innerhalb vorgegebener Zeitspannen zu erreichen, um insbesondere bei einer "walk-through"-Attraktion den Besucherstrom zu steuern und einen kontinuierlichen planbaren Durchsatzbetrieb zu gewährleisten. Sobald der mindestens eine Besucher den vorgegebenen Parcours, Weg, den "Geofence" verlässt oder zu sich zu langsam, insbesondere durch die Attraktion, bewegt, kann die Exoskeletteinheit aus dem zweiten Betriebsmodus in den ersten Betriebsmodus wechseln und durch Stimulationen bzw. erzwungene Bewegungen den jeweiligen Besucher steuern. Für die jeweilige Attraktion können insbesondere zeitliche Vorgaben definiert werden, um die maximale Verweildauer festzulegen. Bewegt sich der Besucher zu langsam oder verbleibt er an einer Stelle zu lange, kann eine entsprechende Stimulation zur Durchsatzoptimierung verwendet werden.

Weiterhin ist es vorteilhaft, wenn der Freizeitpark und/oder die Attraktion Besuchererfassungsmittel aufweist, und dass in Abhängigkeit von den Besuchererfassungsmitteln eine Bewegung und/oder Haltung durch die Exoskeletteinheit auf den mindestens einen Besucher erzwungen wird. Die Besuchererfassungsmittel können beispielsweise die Anzahl von weiteren Besuchern in einem Bereich des Freizeitparks und/oder einer Attraktion erfassen und/oder einen Durchsatz von weiteren Besuchern in einem Bereich des Freizeitparks und oder der Attraktion. Die Besuchererfassungsmittel können mit anderen Worten den Besucherandrang in einem Bereich des Freizeitparks, eine Attraktion oder in einem Bereich einer Attraktion erfassen und den mindestens einen Besucher gezielt stimulieren, um eine Durchsatzoptimierung zu bewirken. Entweder kann der mindestens eine Besucher in einen weniger frequentierten Bereich des Freizeitparks oder der Attraktion gelenkt werden oder durch eine Stimulation angeregt oder gezwungen werden, die Attraktion oder den Freizeitpark oder den Bereich der Attraktion schneller zu durchlaufen, um eine Durchsatzoptimierung zu erreichen und Benutzerströme besser zu steuern.

Eine Weiterbildung des vorgeschlagenen Verfahrens sieht vor, dass dem mindestens einen Besucher ein xR-Headset bereitgestellt wird, und dass das xR-Headset dem jeweiligen mindestens einen Besucher einen medialen Inhalt präsentieren kann. An dieser Stelle ist anzumerken, dass im Zusammenhang mit dieser Erfindung der Begriff "xR" als Synonym für AR (augmented reality), VR (virtual reality), ER (extended reality), MR (mixed reality) usw. verwendet wird, wobei diese Auflistung nicht beschränkend und abschließend ist.

Nach Maßgabe einer Weiterbildung kann die Exoskeletteinheit mit dem Freizeitpark und/oder der Attraktion und/oder dem xR-Headset kommunizieren. Beispielsweise kann die Anlagensteuerung oder die Steuereinrichtung des Freizeitparks durch entsprechende Steuerbefehle die Exoskeletteinheit "fernsteuern", aber auch die Exoskeletteinheit kann Informationen an die Anlagensteuerung und/oder die Steuereinrichtung das Freizeitparks übermitteln. Insbesondere ist es möglich, dass die Exoskeletteinheit eine Position und/oder Ausrichtung an die Anlagensteuerung und/oder Steuereinrichtung des Freizeitparks übermittelt, wobei die Position und/oder Ausrichtung der Position der jeweiligen mindestens einen Exoskeletteinheit bzw. des die Exoskeletteinheit tragenden Besuchers entspricht. Auch kann die Exoskeletteinheit weitere Informationen übermitteln, welche zur Beurteilung des Erlebniswerts des mindestens einen Benutzers herangezogen werden können. Solche Informationen können beispielsweise die physische Reaktion des mindestens einen Benutzers auf einen Effekt oder auf einen Inhalt der Attraktion bzw. der Wiedergabeeinrichtung beinhalten und zur Verbesserung des Erlebniswertes einer Attraktion oder eines Freizeitparks beitragen. Grundsätzlich ist somit eine bidirektionale Kommunikation zwischen der Anlagensteuerung der Attraktion und/oder der Steuereinrichtung des Freizeitparks möglich.

Die mindestens eine von der Exoskeletteinheit erzwungene Bewegung und/oder Haltung kann ferner mit dem durch das xR-Headset wiedergegebenen Inhalt synchronisierbar sein. Die Exoskeletteinheit kann folglich mit dem xR-Headset kommunizieren, wodurch neben einer visuellen oder audiovisuellen Stimulation über das xR-Headset eine darauf abgestimmte haptische Stimulation durch eine Bewegung und erzwungene Haltung erfolgen kann. Es kann somit eine höchstmögliche Intensität der Immersion erreicht werden.

Die Exoskeletteinheit kann ferner Daten für die Erzeugung des Inhaltes bereitstellen bzw. an eine Datenverarbeitungseinrichtung, die den Inhalt erzeugt, übermitteln, wobei der Inhalt in Abhängigkeit bzw. unter Berücksichtigung der Daten erzeugt wird. Dadurch kann eine detailgetreue Darstellung des Inhaltes ermöglicht werden. Es können Zustandsinformationen übermittelt werden, die es ermöglichen, beispielsweise Gliedmaßen realitätsnah durch das xR-Headset darzustellen. Beispielsweis können Arme, Hände, Finger, Beine und/oder Füße entsprechend dargestellt werden, wodurch das Erlebnis des Inhaltes erweitert werden kann.

Weiterhin hat es sich als vorteilhaft erwiesen, wenn die Exoskeletteinheit eine Sensorik verwendet, die eine Umgebung der Exoskeletteinheit erfassen bzw. überwachen kann. In Abhängigkeit von der Sensorik bzw. in Abhängigkeit von den von der Sensorik ermittelten Daten kann die Exoskeletteinheit mindestens eine Haltung oder eine Bewegung des Benutzers erzwingen. Wird beispielsweise ein Abstand zu einem Gegenstand und/oder einem weiteren Besucher unterschritten, kann durch eine gezielte Stimulation der Besucher davon abgehalten werden, den Abstand weiter zu verringern. Für den Fall, dass dem mindestens einen Benutzer ein xR-Headset bereitgestellt ist, kann auch - also ergänzend oder alternativ - die Sensorik des xR-Headsets verwendet werden.

Die Sensorik kann Einflüsse aus der Umgebung, wie beispielsweise Gegenstände oder weitere Besucher, erfassen. Die Exoskeletteinheit kann somit helfen, eine Kollision mit realen Gegenständen zu vermeiden und Abstand auch zu weiteren Besuchern wahren.

Reale Gegenstände in dem Freizeitpark und/oder der Attraktion können beispielsweise nicht durch den Inhalt von dem xR-Headset dargestellt werden. Auch können diese realen Gegenstände für den mindestens einen Besucher, insbesondere in einem Darkride, nicht visuell erkennbar sein. Auch kann die Sensorik beispielsweise zur Einhaltung von Hygieneregeln verwendet werden, um einen auflagekonformen Betrieb der Attraktion und/oder das Freizeitparks sicher zu stellen.

Eine Weiterbildung des zuvor beschriebenen Verfahrens und der Weiterbildungen dessen sieht vor, dass die Exoskeletteinheit Bedienmittel aufweist, durch die der jeweilige mindestens eine Benutzer die Exoskeletteinheit steuern kann. Bevorzugt kann das Bedienmittel eine Mensch-Maschine-Schnittstelle sein, wobei weiter bevorzugt die Exoskeletteinheit mechanische Bedienmittel und/oder eine Sprachsteuerung aufweist. Die Bedienmittel können eine Panikfunktion aufweisen, die dem Umstand geschuldet ist, dass die Exoskeletteinheit die Bewegungsfreiheit des Benutzers einschränkt. Eine Sprachsteuerung kann ermöglichen, dass bei Nennung eines Sprachbefehls bzw. eines "Codewortes" die Exoskeletteinheit dem Besucher die vollständige Kontrolle über seine Bewegung bzw. Haltung bzw. Körper zurückgibt.

Durch die Bedienmittel, aber auch ferngesteuert durch die Anlagensteuerung und/oder die Steuereinrichtung des Freizeitparks und/oder in Abhängigkeit von der Position und oder Ausrichtung, kann die Exoskeletteinheit aus dem zweiten Betriebsmodus, der eine Zwangsführung des Körpers oder eines Körperteils beinhaltet, in den ersten Betriebsmodus wechseln, in dem die Exoskeletteinheit einen Bewegungswunsch des mindestens einen Benutzers erfasst und diesem folgt bzw. diesen unterstützt.

Ein weiterer Aspekt der vorliegenden Erfindung betrifft einen Freizeitpark, insbesondere zur Durchführung des zuvor beschriebenen Verfahrens und dessen Weiterbildungen, mit mindestens einer Attraktion, insbesondere einem "walk-through" oder Darkride, aufweisend mindestens eine Exoskeletteinheit mit mindestens einer Bewegungseinrichtung, wobei die Exoskeletteinheit konfiguriert ist, dem mindestens einen Besucher eine Haltung und/oder eine Bewegung aufzuzwingen.

Eine bevorzugte Weiterbildung des Freizeitparks sieht vor, dass Kommunikationsmittel vorgesehen sind, und dass die mindestens eine Exoskeletteinheit mittels der Kommunikationsmittel mit dem Freizeitpark und/oder der Attraktion kommunizieren kann. Die Kommunikationsmittel können eine bidirektionale Kommunikation zwischen der mindestens einen Exoskeletteinheit und dem Freizeitpark und/oder der Attraktion ermöglichen, wobei die Kommunikation vorzugsweise kabellos erfolgt. Durch die Kommunikationsmittel können Steuerbefehle und Informationen ausgetauscht werden. Beispielsweise kann ein Betriebszustand, eine Position, eine Ausrichtung und/oder Sensordaten der Exoskeletteinheit an den Freizeitpark und/oder die Attraktion bzw. die Steuereinrichtung des Freizeitparks/oder die Anlagensteuerung der Attraktion übertragen werden. Dabei bietet sich die Möglichkeit, sich frei in einem Raum in dem Freizeitpark oder der Attraktion zu bewegen und mit der Szenerie zu interagieren, anstatt wie bisher im Stand der Technik durch die Szenerie einfach hindurchgefahren zu werden oder durch diese hindurchzulaufen.

Nach Maßgabe einer bevorzugten Weiterbildung ist mindestens ein xR-Headset zum Darstellen eines Inhalts für den mindestens einen Besucher vorgesehen, wobei das mindestens eine XR-Headset mit der Exoskeletteinheit synchronisierbar ist. Die Exoskeletteinheit kann mittels einer Schnittstelle mit dem xR-Headset verbunden sein, wodurch das xR-Headset Steuerbefehle an die jeweilige Exoskeletteinheit übertragen kann. Auch kann die Exoskeletteinheit eine den Inhalt ausgebende oder erzeugende Datenverarbeitungseinrichtung aufweisen, welche den von dem xR-Headset dargestellten Inhalt über die Schnittstelle an das xR-Headset überträgt.Die Exoskeletteinheit kann durch haptische Stimulationen Ereignisse in dem dargestellten Inhalt ergänzen, und ein haptisches Feedback auf den Körper des mindestens einen Besuchers übertragen, wodurch das Erlebnis in dem Freizeitpark oder der Attraktion noch mehr zu einer Sinnestäuschung wird. Die Attraktion kann beispielsweise eine Free-Roaming VR oder AR-Anwendung sein.

Darüber hinaus hat es sich als vorteilhaft erwiesen, wenn der Freizeitpark und/oder die mindestens eine Attraktion Besuchererfassungsmittel aufweist. Die Besuchererfassungsmittel können für Kapazitätseinschätzungen und Besucherstromplanungen verwendet werden, wobei die Anzahl von Besuchern in der mindestens einen Attraktion und/oder in einer Warteschlange der mindestens einen Attraktion erfasst und/oder geschätzt werden kann. Die Besuchererfassungsmittel können Daten an die Steuereinrichtung des Freizeitparks und/oder der Anlagensteuerung der mindestens ein Attraktion übertragen und anhand eines Modells können Maßnahmen bestimmt werden, welche den Besucherdurchsatz optimieren und eine gezielte Besucherstromplanung ermöglichen. Beispielsweise können Besucher durch haptische Stimulationen zu weniger frequentiert besuchten Attraktionen gelenkt werden oder durch die Exoskeletteinheit Einschränkungen eines Weges in dem Freizeitpark oder des Parcours der Attraktion ohne sichtbare Barriere eröffnen.

Weiterhin hat es sich als vorteilhaft erwiesen, wenn mindestens eine Wiedergabeeinrichtung vorgesehen ist. Die mindestens eine Wiedergabeeinrichtung kann in dem Freizeitpark aber auch in oder an der mindestens einen Attraktion angeordnet sein, welche dem mindestens einen Besucher ein Szenario präsentieren kann. Die Wiedergabeeinrichtung, die Anlagensteuerung der Attraktion oder die Steuereinrichtung des Freizeitparks kann entweder unmittelbar - oder mittelbar über ein untergeordnetes System - mit der mindestens einen Exoskeletteinheit synchronisiert sein.

Beispielsweise kann zu Halloween oder in einer "Horror Night" dem mindestens einen Besucher die Exoskeletteinheit angelegt bzw. angezogen werden. Synchronisiert mit der Wiedergabeeinrichtung, der Anlagensteuerung der Attraktion oder der Steuereinrichtung des Freizeitparks kann der mindestens einen Besucher zumindest zeitweise oder und/oder bereichsweise seiner Bewegungsfreiheit durch eine erzwungene Bewegung, eingefrorene oder erzwungenen Haltung beraubt werden. Dadurch ist es möglich, den mindestens einen Besucher bedrohlichen Szenarien ganz nah auszusetzen, ohne dass Schreckreaktionen, wie beispielsweise Weglaufen oder Schlagen, befürchtet werden müssen. Es werden Gefahren für den mindestens einen Besucher als auch für weitere Besucher minimiert bzw. ausgeschlossen. Der Besucher kann in diesem Szenarien durch die haptische Stimulation zwangsgeführt werden und somit durch eine "fremde, externe Kraft" bestimmt werden, wodurch das Szenario in dem Freizeitpark oder der Attraktion noch intensiver werden wird. Auch kann der mindestens eine Benutzer durch Zwangsführung selbst Teil des Szenarios werden, in dem der mindestens eine Besucher gezwungen ist, mit dem Szenario der Wiedergabeeinrichtung synchronisierte Bewegungen durchzuführen.

Es hat sich vorteilhaft erwiesen, wenn Positionserfassungsmittel vorgesehen sind, durch die eine Position der mindestens einen Exoskeletteinheit in dem Freizeitpark oder in der Attraktion erfasst werden kann. Die Positionserfassungsmittel können stationär, also in dem Freizeitpark ortsfest, vorgesehen sein, und die mindestens eine Exoskeletteinheit in dem Freizeitpark tracken. Ergänzend oder alternativ können die Positionserfassungsmittel in der Exoskeletteinheit vorgesehen sein und auf bekannten Positionserfassungsmethoden basieren. Weiterhin ergänzend oder alternativ kann die Exoskeletteinheit auf Positionserfassungsmittel des XR-Headsets zurückgreifen.

Mittels eines vorgegebenen Datensatzes kann in Abhängigkeit von der Position und/oder Ausrichtung zumindest abschnittsweise oder zeitweise die mindestens eine Exoskeletteinheit Bewegungen oder Haltungen des mindestens einen Benutzers erzwingen, wobei der Datensatz lokal in der Exoskeletteinheit gespeichert sein kann und/oder extern, beispielsweise in der Steuereinrichtung des Freizeitparks und/oder der Anlagensteuerung der Attraktion aber auch in der Datenverarbeitungseinrichtung des xR-Headsets. Der Datensatz kann beispielsweise ein digitales Modell des Freizeitparks und/oder der Attraktion oder des Parcours der Attraktion umfassen. Die Exoskeletteinheit kann den mindestens einen Besucher auf virtuellen Wegen führen, wodurch das Bewegungsmuster des Besuches bestimmbar ist und der Besucher ohne sichtbare Barrieren auf vorgegebenen Wegen gehalten werden kann. Daraus ergeben sich eine Vielzahl von Szenarien, die einerseits zur Benutzerstromplanung, Kapazitätseinschätzung als auch zur Belustigung der Besucher verwendet werden können und modular einsetzbar sind.

Eine Weiterbildung der Exoskeletteinheit sieht vor, dass eine Sensorik vorgesehen ist, durch die die Umgebung des mindestens einen Besuchers mit der Exoskeletteinheit erfasst bzw. überwacht werden kann. In Abhängigkeit von der Sensorik bzw. in Abhängigkeit von den vorn der Sensorik ermittelten Daten kann die Exoskeletteinheit mindestens eine haptische Stimulation auf die Benutzer ausüben. Wird beispielsweise ein Abstand zu einem Gegenstand und/oder einem weiteren Besucher unterschritten, kann eine haptische Stimulation erzeugt werden, um den Besucher davon abzuhalten, den Abstand weiter zu verringern. Für den Fall, dass dem mindestens einen Benutzer ein xR-Headset bereitgestellt ist, kann auf die Sensorik des xR-Headsets zurückgegriffen werden.

Die Sensorik kann die Umgebung des mindestens einen Besuchers bzw. der Exoskeletteinheit an dem mindestens einen Besucher überwachen und Gegenstände oder weitere Besucher erfassen. Die Exoskeletteinheit kann eine Kollision mit realen Gegenständen vermeiden oder einen Abstand wahren. Die realen Gegenstände können beispielsweise nicht im Inhalt von dem xR-Headset dargestellt werden und/oder für den mindestens einen Besucher, insbesondere in einem Darkride, nicht visuell erkennbar sein. Auch kann die Sensorik beispielsweise zur Einhaltung von Hygieneregeln verwendet werden, um einen auflagekonformen Betrieb der Attraktion und/oder des Freizeitparks sicherzustellen.

Ein weiterer Aspekt der vorliegenden Erfindung betrifft die Verwendung einer Exoskeletteinheit zur Besucherstromplanung und/oder -führung mindestens eines Besuches in einem Freizeitpark oder einer Attraktion.

Nachfolgend wird unter Bezugnahme auf die begleitende Zeichnung ein Ausführungsbeispiel im Detail beschrieben. Es zeigen:
- Figur 1: eine schematische Darstellung eines Besuchers einer Attraktion eines Freizeitparks mit einer Exoskeletteinheit und einem xR-Headset, und
- Figur 2: eine schematische und stark vereinfachte Darstellung des Freizeitparks.

Nachfolgend werden gleiche oder funktional gleiche Bauteile in den Figuren mit gleichen Bezugszeichen gekennzeichnet. Der Übersichtlichkeit halber sind in den einzelnen Figuren nicht alle gleichen oder funktional gleichen Teile mit einer Bezugsziffer versehen.

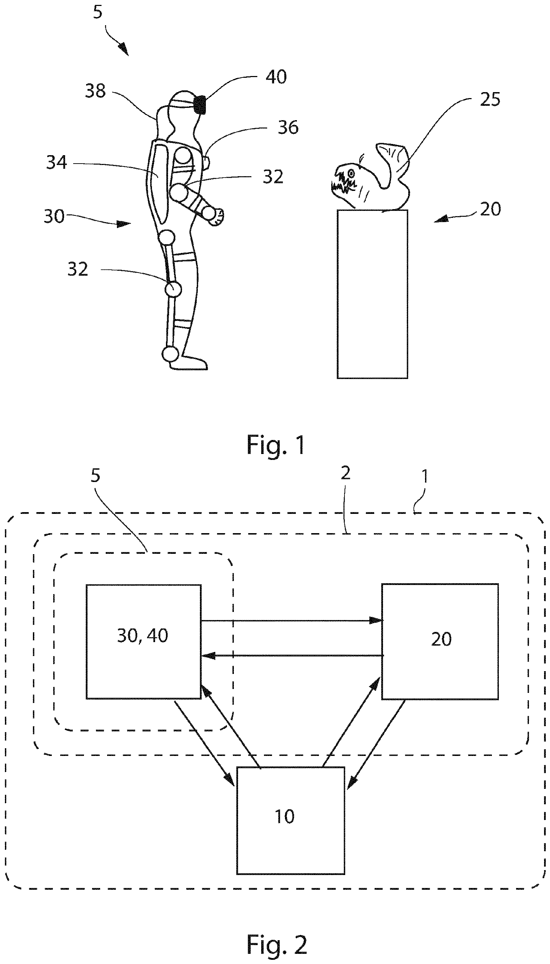

Figur 1 ist ein Besucher 5 eines Freizeitparks 1 zu entnehmen, der eine Attraktion 2 zum Erfahren eines Erlebnisses aufsucht. Der Besucher 5 trägt eine Exoskeletteinheit 30, welche durch technische Mittel eine mechanische und haptisch wahrnehmbare Stimulation für den Benutzer 5 erzeugen kann, wodurch dem Besucher 5 eine Bewegung oder eine Haltung mindestens eines Körperteils oder eines Körpergliedes erzwungen werden kann.

Die Exoskeletteinheit 30 kann mehrere Bewegungseinrichtungen 32 aufweisen, durch die Gelenkenbewegungen des mindestens einen Benutzers 5 unterstützt, gebremst, verstärkt und/oder erzwungen werden können und so eine mechanische und haptisch wahrnehmbare Stimulation für den Benutzer 5 erzeugen.

Die Bewegungseinrichtung 32 kann einen oder mehrere Aktoren umfassen, die eine dem Körperteil oder dem Körperglied nachempfundene Bewegung an einer Stützstruktur erzeugen, wobei die Stützstruktur 33 durch Befestigungsmittel mit dem Körperteil oder dem Körperglied gekoppelt ist.

In dem dargestellten Ausführungsbeispiel kann die Exoskeletteinheit 30 sowohl auf die Beine des Benutzers 5 als auch auf die Arme des Benutzers 5 einwirken und umfasst hierzu eine Steuerung 34, welche in Form eines Rucksackes auf dem Rücken des Benutzers 5 angeordnet sein kann, die Steuerbefehle verarbeiten kann und die Bewegungseinrichtungen 32 entsprechend ansteuert.

Die Ansteuerung der Bewegungseinrichtungen 32 bzw. der Aktoren durch die Steuerung 34 der Exoskeletteinheit 30 kann auf unterschiedliche Weise erfolgen. In einem ersten Betriebsmodus kann die Exoskeletteinheit 30 eine Haltung oder eine Bewegung des Besuchers 5 vorgeben bzw. aufzwingen. Der Besucher 5 wird "ferngesteuert" bzw. von einer fremden externen Kraft geführt.

In einem zweiten Betriebsmodus kann die Exoskeletteinheit 30 einer vom Besucher 5 vorgegebenen Bewegung folgen. Hierzu kann eine Sensorik 36 vorgesehen sein, die einen Bewegungswunsch des Besuchers 5 erfasst. Die Sensorik 36 kann mindestens einen Drucksensor und/oder mindestens einen Drehmomentsensor umfassen, die in einem Gelenk der Exoskeletteinheit 30 angeordnet sein können, um eine Bewegung des Besuchers 5 zu erfassen. Auch kann mindestens ein Elektromyogramm-Sensor vorgesehen sein, welcher zur Erfassung einer Bewegung des Besuchers 5 oder eines Bewegungswunsches des Besuchers 5 die Aktivierung eines Muskels oder einer Muskelgruppe erfasst. Die Exoskeletteinheit 30 kann sodann eine der Aktivierung des Muskels entsprechende Bewegung mittels der mindestens einen Bewegungseinheit 32 bzw. des mindestens einen Aktors ausführen und eine haptische Stimulation erzeugen bzw. eine Bewegung unterstützen, bremsen bzw. dämpfen oder hemmen.

Die Steuerung 34 kann weiterhin einen (nicht dargestellten) Energiespeicher aufweisen, durch den sowohl die Elektronik der Steuerung 34 als auch die Bewegungseinrichtung 32 der Exoskeletteinheit 30 mit Energie versorgt werden können. Die Elektronik der Steuerung 34 kann eine (nicht dargestellte) Datenverarbeitungseinrichtung umfassen, auf der für den Freizeitpark 1 oder der Attraktion 2 spezifische Daten und Programme gespeichert sein können, welche es ermöglichen, dass die Bewegungseinheit 32 zur Erzeugung der haptischen Stimulation oder der Bewegung des Benutzers 5 in Abhängigkeit von der Position und/oder Ausrichtung der Exoskeletteinheit 30 bzw. des Besuches 5 erzeugt werden.

Der Freizeitpark 1 kann eine, vorzugsweise mehrere Attraktionen 2 aufweisen und weiterhin eine Steuereinrichtung 10 umfassen. Die Attraktion 2 als auch der Freizeitpark 1 können mindestens eine Wiedergabeeinrichtung 25 aufweisen, welche Unterhaltungseffekte oder Inhalte wiedergeben bzw. präsentieren kann und durch eine Anlagensteuerung 20 als auch von der übergeordneten Steuereinrichtung 10 des Freizeitparks 1 gesteuert werden kann.

Der Freizeitpark 1 und/oder die mindestens eine Attraktion 2 können bzw. kann eine Vielzahl von Exoskeletteinheiten 30 für Besucher vorhalten, welche dem Besucher an einem Eingangsbereich des Freizeitparks 1 und/oder der Attraktion 2 ausgehändigt werden. Eine Rückgabe kann beim Verlassen der Attraktion 2 oder des Freizeitparks 1 erfolgen.

Die Attraktion 2 gemäß Figur 1 kann eine sogenannte "walk-trough"-Attraktion sein, wobei die Attraktion 2 einen Parcours vorgibt, der von dem Besucher 5 durchlaufen werden kann. Entlang des Parcours werden dem Besucher 5 Effekte, Darstellungen oder Animationen präsentiert, welche einen besonders hohen Unterhaltungswert aufweisen und Nervenkitzel verursachen. Die Exoskeletteinheit 30 kann beispielsweise den Besucher 5 in einer Ausführungsform durch den Freizeitpark 1 und/oder durch die Attraktion 2 führen. Hierzu kann die Position und/oder Ausrichtung der Exoskeletteinheit 30 bzw. des Besuchers 5 in dem Freizeitpark 1 und/oder der Attraktion 2 auf unterschiedliche Weise - wie nachfolgend erläutert werden wird - erfolgen:
Die Sensorik 36 kann Positionserfassungsmittel aufweisen, durch die die Position und/oder Ausrichtung der Exoskeletteinheit 30 in dem Freizeitpark 1 und/oder der Attraktion 2 erfasst werden kann. Hierzu können ein oder mehrere aus dem Stand der Technik hinreichend bekannte Positionserfassungsmittel vorgesehen sein, welche sowohl unter freien Himmel als auch in geschlossenen Räumen eine Erfassung der Position und/oder der Ausrichtung ermöglichen.

Auch kann die Position und/oder Ausrichtung der Exoskeletteinheit 30 durch den Freizeitpark 1 und/oder durch die jeweilige Attraktion 2 erfolgen, wobei die Steuereinrichtung 10 des Freizeitparks 1 oder eine Anlagensteuerung 20 der Attraktion die Position und/oder die Ausrichtung der Exoskeletteinheit 30 des Benutzers 5 erfassen kann.

Es besteht weiterhin die Möglichkeit, die Exoskeletteinheit 30 mit einem xR-Headset 40 dem Besucher 5 bereitzustellen, wobei die Exoskeletteinheit 30 auf eine (nicht dargestellte) Sensorik des xR-Headsets 40 zurückgreifen kann, um die Position und/oder die Ausrichtung der Exoskeletteinheit 30 bzw. des Benutzers 5 zu erfassen.

Das xR-Headset 40 kann dem jeweiligen mindestens einen Besucher 5 einen medialen Inhalt präsentieren, wobei mindestens eine von der Exoskeletteinheit 30 erzeugte haptische Stimulation mit dem medialen Inhalt synchronisierbar ist. Die Exoskeletteinheit 30 kann über eine Schnittstelle mit dem xR-Headset 40 kommunizieren, wodurch neben einer visuellen oder audiovisuellen Stimulation über das xR-Headset 40 eine darauf abgestimmte haptische Stimulation durch die Exoskeletteinheit 30 erfolgen kann. Es kann somit eine höchstmögliche Intensität der Immersion erreicht werden. Der Begriff "xR" wird als Synonym für AR (augmented reality), VR (virtual reality), ER (extended reality), MR (mixed reality) verwendet.

An dieser Stelle wird angemerkt, dass die zuvor beschriebenen Methoden der Erfassung der Position und/oder der Ausrichtung der Exoskeletteinheit 30 bzw. des Benutzers 5 miteinander kombiniert werden können.

Die Exoskeletteinheit 30 kann mit der Anlagensteuerung 20 der Attraktion 2 und/oder der Steuereinrichtung 10 des Freizeitparks 1 kommunizieren, wobei die Kommunikation, wie in Figur 2 durch die Pfeile symbolisiert, bidirektional erfolgen kann. Sowohl Steuerbefehle als auch Zustandsinformationen können ausgetauscht werden.

Die Steuereinrichtung 10 und/oder Anlagensteuerung 20 kann beispielsweise Steuerbefehle oder Daten an die Exoskeletteinheit 30 übertragen, wodurch der Benutzer 5 durch den Freizeitpark 1 oder die Attraktion 2 gelenkt werden kann. Beispielsweise kann der Benutzer 5 durch haptische Stimulationen durch die Exoskeletteinheit 30 gezielt zu der mindestens einen Attraktion 2 und/oder durch die Attraktion 2 gelenkt werden oder entlang vorgegebener Wege geführt werden, ohne dass sichtbare Barrieren zur Lenkung der Besucher 5 vorgesehen sein müssen. Die Lenkung bzw. Steuerung des mindestens einen Benutzers 5 kann beispielsweise durch ein Hemmen der Bewegung erfolgen, sobald der Besucher 5 einen vorbestimmten Weg bzw. eine Geofence verlässt. Auch kann dem mindestens einen Besucher 5 eine Bewegung aufgezwungen werden, durch die der mindestens eine Besucher 5 gelenkt wird.

Die Exoskeletteinheit 30 kann mit dem Geschehen in der Attraktion 2 oder des Freizeitparks 1 synchronisiert werden, wodurch zeitlich und/oder örtlich die Exoskeletteinheit 30 dem Besucher 5 eine Bewegung oder eine Haltung aufzwingt. Beispielsweise kann der Besucher 5 durch gezielt erzeugte Bewegungen in das Geschehen in dem Freizeitpark 1 oder der Attraktion 2 eingebunden werden. Auch besteht die Möglichkeit, die Haltung oder die Bewegung des Besuchers 5 zu kontrollieren, um bei Spezialeffekten, beispielsweise einer Wiedergabeeinrichtung 25, Abwehrreaktionen zu unterbinden und Gefahren zu minimieren, wodurch der Besucher 5 noch näher in das Geschehen des Freizeitparks 1 und/oder der Attraktion 2 eingebunden werden kann.

Die jeweilige Attraktion 2 und/oder der Freizeitpark 1 können (nicht dargestellte) Besuchererfassungsmittel aufweisen, durch die der Besucherandrang in der Attraktion 2 und/oder in dem Freizeitpark 1 bestimmt werden können bzw. kann. Die Besuchererfassungsmittel können beispielsweise die Besucherdichte, bevorzugt bereichsweise erfassen und beispielsweise die Anzahl der Besucher in der Attraktion 2 oder der Warteschlange vor der Attraktion 2 erfassen. Durch die Bestimmung der Besucherströme in der Attraktion 2 als auch in dem Freizeitpark 1 kann der mindestens eine Besucher 5 gezielt stimuliert werden, um weniger frequentierte Attraktionen 2 oder Bereiche des Freizeitparks 1 aufzusuchen, wodurch Besucherströme in dem Freizeitpark 1 kontrolliert bzw. beeinflusst bzw. gesteuert werden können.

Der Besucher 5 kann beispielsweise in der Attraktion 2 durch die Exoskeletteinheit 30 angehalten werden, den Parcours innerhalb eines vorgegebenen Zeitfensters zu durchlaufen, um einen Besucherdurchsatz in der Attraktion 2 zu optimieren und innerhalb der Attraktion 2 den Besucherstrom zu kontrollieren.

Das xR-Headset 40 kann eine eigene Datenverarbeitungseinrichtung zum Erzeugen des Inhalts aufweisen, der dem jeweiligen Besucher 5 präsentiert werden soll. Das xR-Headset 40 kann beispielsweise eine virtuelle Realität - insbesondere in Abhängigkeit von der Position und/oder Ausrichtung des xR-Headsets in der Attraktion 2 oder in dem Freizeitpark - erzeugen und den Inhalt dem Besucher 5 stereogeographisch präsentieren. Synchronisiert zu dem erzeugten Inhalt kann die Exoskeletteinheit 30 haptisch wahrnehmbare Stimulationen für den Besucher 5 erzeugen, wodurch eine höchstmögliche Intensität der Immersion erreicht werden kann.

Die Exoskeletteinheit 30 kann darüber hinaus Daten an das xR-Headset 40 übertragen. Beispielsweise kann die Exoskeletteinheit 30 die Haltung der Arme oder der Beine bestimmen und entsprechende Daten an das xR-Headset 40 übermitteln. Die Haltung der Beine oder der Arme kann realitätsgetreu in dem wiedergegebenen Inhalt des xR-Headsets 40 dargestellt werden.

Gemäß einer nicht dargestellten Weiterbildung kann die Datenverarbeitungsanlage zur Erzeugung des wiedergebbaren Inhalts Bestandteil der Steuerung 34 der Exoskeletteinheit 30 sein. Die Steuerung 34, die Datenverarbeitungsanlage, die Sensorik, Kommunikationsmittel sowie die Energieversorgung können in einer solchen kompakten Einrichtung insbesondere als Rucksack bzw. "Backpack" bereitgestellt werden, wodurch ein umfassendes immersives Erlebnis für den mindestens einen Besucher 5 erzeugt werden kann.

### Bezugszeichenliste

- 1: Freizeitpark
- 2: Attraktion
- 5: Besucher
- 10: Steuereinrichtung
- 20: Anlagensteuerung
- 25: Wiedergabeeinrichtung
- 30: Exoskeletteinheit
- 32: Aktor
- 34: Steuerung
- 36: Sensorik
- 40: xR-Headset

## Patentansprüche

1. Verfahren zum Betreiben eines Freizeitparks (1) für mindestens einen Besucher (5) und mit mindestens einer Attraktion (2), **dadurch gekennzeichnet, dass** für den mindestens einen Besucher (5) mindestens eine Exoskeletteinheit (30) mit mindestens einer Bewegungseinrichtung (32) bereitgestellt ist und die mindestens eine Exoskeletteinheit (30) dem mindestens einen Besucher (5) mindestens eine Bewegung oder Haltung aufzwingt,
wobei der mindestens eine Besucher (5) mittels eines vorgegebenen Datensatzes zumindest abschnittsweise und/oder zeitweise durch den Freizeitpark (1) und/oder durch einen Parcours der Attraktion (2) von der Exoskeletteinheit (30) geführt wird.

2. Verfahren nach Anspruch 1,
**dadurch gekennzeichnet, dass**
die Exoskeletteinheit (30) eine Bewegung des Besuchers (5) erzwingt, dämpft und/oder eine Haltung des Besuchers (5) festlegt.

3. Verfahren nach Anspruch 1 oder 2,
**dadurch gekennzeichnet, dass**
die Exoskeletteinheit (30) die Bewegung oder Haltung zeitabhängig, in Abhängigkeit von der Position und/oder der Ausrichtung des Besuchers (5) und/oder als Folge empfangener Steuerbefehle erzeugt.

4. Verfahren nach einem der Ansprüche 1 bis 3,
**dadurch gekennzeichnet, dass**
die Exoskeletteinheit (30) einen ersten Betriebsmodus aufweist, in dem die Bewegung oder Haltung unabhängig von einer Körperhaltung, einer Bewegung und/oder eines Bewegungswunsches des mindestens einen Besuchers (5) erzwungen wird und mindestens einen zweiten Betriebsmodus, in dem die Körperhaltung, die Bewegung und/oder der Bewegungswunsch des mindestens einen Besuchers (5) unterstützt wird.

5. Verfahren nach einem der vorgenannten Ansprüche,
**dadurch gekennzeichnet, dass**
der Freizeitpark (1) und/oder die Attraktion (2) Besuchererfassungsmittel aufweist, und dass in Abhängigkeit von den durch die Besuchererfassungsmittel erfassten Daten die Exoskeletteinheit (30) betrieben wird.

6. Verfahren nach einem der vorgenannten Ansprüche,
**dadurch gekennzeichnet, dass**
dem mindestens einen Besucher (5) ein xR-Headset (40) bereitgestellt ist, und dass das xR-Headset (40) dem mindestens einen Besucher (5) einen Inhalt präsentiert.

7. Verfahren nach einem der vorgenannten Ansprüche,
**dadurch gekennzeichnet, dass** die Exoskeletteinheit (30) von dem Freizeitpark (1), der Attraktion (2) und/oder von dem xR-Headset (40) Steuerbefehle.

8. Verfahren nach einem der vorgenannten Ansprüche,
**dadurch gekennzeichnet, dass**
eine Sensorik (36) vorgesehen ist, und dass die Exoskeletteinheit (30) auf den mindestens einen Besucher (5) einwirkt, wenn der mindestens einen Besucher (5) einen vorgebenden Weg, Bereich oder Zeitfenster verlässt oder ein vordefinierter Abstand zu einem Gegenstand oder einem weiteren Besucher unterschritten wird.

9. Freizeitpark (1) mit mindestens einer einen Parcours aufweisenden Attraktion (2), insbesondere einer "walk trough"-Attraktion oder einem Darkride, **dadurch gekennzeichnet, dass** der Freizeitpark (1) mindestens eine Exoskeletteinheit (30) mit mindestens einer Bewegungseinrichtung (32) für mindestens einen Besucher (5) aufweist,
wobei dem mindestens einen Besucher (5)
mindestens eine Bewegung oder Haltung aufgezwungen werden kann, wobei der mindestens eine Besucher (5) mittels eines vorgegebenen Datensatzes zumindest abschnittsweise und/ oder zeitweise durch den Freizeitpark (1) und/oder durch den Parcours der Attraktion (2) von der Exoskeletteinheit (30) geführt wird.

10. Freizeitpark (1) nach Anspruch 9,
**dadurch gekennzeichnet, dass** Kommunikationsmittel vorgesehen sind, und dass der Freizeitpark (1) und/oder die mindestens eine Attraktion (2) Steuerbefehle an die Exoskeletteinheit (30) übertragen kann.

11. Freizeitpark (1) nach Anspruch 10,
**dadurch gekennzeichnet, dass** mindestens eine Wiedergabeeinrichtung (25) vorgesehen ist, und dass die mindestens eine Wiedergabeeinrichtung über Kommunikationsmittel mit der mindestens einen Exoskeletteinheit (30) synchronisiert ist.

12. Freizeitpark (1) nach einem der Ansprüche 9 bis 11, **dadurch gekennzeichnet, dass** der Freizeitpark (1) und/oder die mindestens eine Attraktion (2) Besuchererfassungsmittel aufweist.

13. Freizeitpark (1) nach einem der Ansprüche 9 bis 12, **dadurch gekennzeichnet, dass** mindestens ein xR-Headset (40) zum Darstellen eines Inhalts für den mindestens einen Besucher (5) bereitgestellt ist, und dass die Exoskeletteinheit (30) mit dem xR-Headset (40) kommunizieren kann.

14. Freizeitpark (1) nach einem der Ansprüche 9 bis 13, **dadurch gekennzeichnet, dass** Positionserfassungsmittel vorgesehen sind, durch die eine Position der mindestens einen Exoskeletteinheit (30) in dem Freizeitpark (1) oder in der Attraktion (2) erfasst werden kann.

15. Freizeitpark (1) nach einem der Ansprüche 9 bis 14, **dadurch gekennzeichnet, dass** die mindestens einen Exoskeletteinheit (30) eine Sensorik (36) aufweist.

16. Verwendung der Exoskeletteinheit (30) zur Besucherstromführung in dem Freizeitpark (1) nach einem der Ansprüche 9 bis 15.

## Claims

1. Method for operating an amusement park (1) for at least one visitor (5) and having at least one attraction (2),
**characterized in that**,
for the at least one visitor (5), an exoskeleton unit (30), having at least one movement device (32), is provided, and **in that** the at least one exoskeleton (30) forces the at least one visitor (5) into at least one movement or stance,
wherein the at least one visitor (5) is conducted by the exoskeleton unit (30) at least partially and/or intermittently through the amusement park (1) and/or through a parcour of the attraction (2), by means of a specified set of data.

2. Method in accordance with claim 1,
**characterized in that**
the exoskeleton (30) forces, attenuates a movement of the visitor (5) and/or determines a stance of the visitor (5).

3. Method in accordance with claim 1 or 2,
**characterized in that**
the exoskeleton (30) induces the movement or stance time-dependently, in dependence on the position and/or alignment of the visitor (5), and/or in response to received control commands.

4. Method in accordance with any of claims 1 to 3,
**characterized in that**
the exoskeleton (30) comprises a first mode of operation, in which the movement or stance is enforced, regardless of a posture, a movement, and/or of which way the visitor (5) wishes to move, and at least one second mode of operation, in which the posture, the movement, and/or the way the visitor (5) wishes to move is facilitated.

5. Method in accordance with any of the preceding claims,
**characterized in that**
the amusement park (1) and/or the attraction (2) comprise(s) means for detecting visitors, and **in that** the exoskeleton unit (30) is controlled in dependency on the data collected by the means for detecting visitors.

6. Method in accordance with any of the preceding claims,
**characterized in that**
the at least one visitor (30) is provided with an XR headset (40), and **in that** the XR headset presents a content to the at least one visitor (5).

7. Method in accordance with any of the preceding claims,
**characterized in that**
the exoskeleton unit (30) receives control commands from the amusement park (1), the attraction (2) and/or the XR headset (40).

8. Method in accordance with any of the preceding claims,
**characterized in that**
a sensor system (36) is provided, and **in that** the exoskeleton unit (30) acts on the at least one visitor (5) when the at least one visitor (5) leave a specified path, area or time frame, or when a previously defined distance to an object or to a further visitor is not maintained.

9. Amusement park (1), having at least one attraction (2) comprising a parcour, in particular a "walk through" attraction or a dark ride,
**characterized in that** the amusement park (1) comprises at least one exoskeleton unit (30) with at least one movement device (32) for at least one visitor (5),
wherein the at least one visitor (5) can be forced into a movement or stance,
wherein the at least one visitor (5) is at least partially and/or intermittently conducted through the amusement park (1) and/or the parcour of the attraction (2) by the exoskeleton unit (30) by means of a specified set of data.

10. Amusement park (1) in accordance with claim 9,
**characterized in that**
communication means are provided, and **in that** the amusement park (1) and/or the at least one attraction (2) can transmit control commands to the exoskeleton unit (30).

11. Amusement park (1) in accordance with claim 10,
**characterized in that**
at least one playback device (25) is provided, and **in that** the at least one playback device (25) is synchronized with the at least one exoskeleton unit (30) via the communication means.

12. Amusement park (1) in accordance with any of claims 9 to 11,
**characterized in that**
the amusement park (1) and/or the at least one attraction (2) comprise(s) means for detecting visitors.

13. Amusement park (1) in accordance with any of claims 9 to 12,
**characterized in that**
at least one XR headset (40) is provided for displaying a content to the at least one visitor (5), and **in that** the exoskeleton (30) can communicate with the XR headset (40).

14. Amusement park (1) in accordance with any of claims 9 to 13,
**characterized in that**
means for detecting position, by means of which a position of the at least one exoskeleton unit (30) in the amusement park (1) or in the attraction (2) can be detected.

15. Amusement park (1) in accordance with any of claims 9 to 14,
**characterized in that**
the at least one exoskeleton unit (30) comprises a sensor system (36).

16. Use of the exoskeleton unit (30) to guide the flow of visitors in the amusement park (1) in accordance with any of claims 9 to 15.

## Revendications

1. Procédé de fonctionnement d'un parc de loisirs (1) pour au moins un visiteur (5) et au moins une attraction (2),
**caractérisé en ce que**
on fournit à ce visiteur (5) au moins un exosquelette (30) avec au moins une installation de mouvement (32) et on impose à l'exosquelette (30) de ce visiteur (5) un mouvement ou une tenue,
- ce visiteur (5) étant guidé par un jeu de données prédéfinies au moins par segments et/ou au moins par périodes à travers le parc de loisirs (1) et/ou sur un parcours de l'attraction (2) par l'exosquelette (30).

2. Procédé selon la revendication 1,
**caractérisé en ce que**
l'exosquelette (30) impose, amortit, un mouvement du visiteur (5) et/ou fixe une tenue du visiteur (5).

3. Procédé selon la revendication 1 ou 2,
**caractérisé en ce que**
l'exosquelette (30) génère le mouvement ou la tenue en fonction du temps, en fonction de la position et/ou de l'orientation du visiteur (5) et/ou comme conséquence de commandes reçues.

4. Procédé selon l'une des revendications 1 à 3,
**caractérisé en ce que**
l'exosquelette (30) a un premier mode de fonctionnement dans lequel on force le mouvement ou la tenue indépendamment de la tenue corporelle, d'un mouvement et/ou d'un souhait de mouvement du visiteur (5) et au moins un second mode de fonctionnement dans lequel on assiste la tenue corporelle, le mouvement et/ou le souhait de mouvement du visiteur (5).

5. Procédé selon l'une des revendications précédentes,
**caractérisé en ce que**
le parc de loisirs (1) et/ou l'attraction (2) comportent un moyen de saisie de visiteur, et
en fonction des données saisies par le moyen de saisie de visiteur, on fait fonctionner l'exosquelette (30).

6. Procédé selon l'une des revendications précédentes,
**caractérisé en ce que**
on fournit au visiteur (5) un casque de réalité virtuelle xR-(40), et
ce casque de réalité virtuelle xR-(40) présente un contenu à ce visiteur (5).

7. Procédé selon l'une des revendications précédentes,
**caractérisé en ce que**
l'exosquelette (30) reçoit des ordres du parc de loisirs (1), de l'attraction (2) et/ou du casque de réalité virtuelle xR-(40).

8. Procédé selon l'une des revendications précédentes,
**caractérisé par**
un système de capteurs (36), et
l'exosquelette (30) agit sur au moins un visiteur (5) lorsque ce visiteur (5) s'écarte d'un trajet, d'une zone ou d'une fenêtre de temps prédéfinis ou se rapproche de moins d'une distance prédéfinie par rapport à un objet ou à un autre visiteur.

9. Parc de loisirs (1) comportant au moins une attraction (2) avec un parcours, notamment une attraction « walk through » ou une attraction « Darkride »,
le parc de loisirs (1) **caractérisé en ce qu'**il a
au moins un exosquelette (30) avec au moins une installation de mouvement (32) pour au moins un visiteur (5),
- on impose à ce visiteur (5) au moins un mouvement ou une tenue, on conduit ce visiteur (5) avec un jeu de données prédéfinies, au moins par segments ou périodiquement dans le parc de loisirs (1) et/ou sur le parcours de l'attraction (2) avec l'exosquelette (30).

10. Parc de loisirs (1) selon la revendication 9,
**caractérisé par**
des moyens de communication, et
le parc de loisirs (1) et/ou au moins une attraction (2) peuvent transmettre des ordres à l'exosquelette (30).

11. Parc de loisirs (1) selon la revendication 10,
**caractérisé par**
au moins une installation de reproduction (25), et
cette installation de reproduction est synchronisée par des moyens de communication avec au moins un exosquelette (30).

12. Parc de loisirs (1) selon l'une des revendications 9 à 11,
**caractérisé en ce que**
le parc de loisirs (1) et/ou au moins une attraction (2) comportent des moyens de saisie de visiteur.

13. Parc de loisirs (1) selon l'une des revendications 9 à 12,
**caractérisé par**
au moins un casque de réalité virtuelle xR (40) pour représenter un contenu pour au moins un visiteur (5), et
l'exosquelette (30) communique avec le casque de réalité virtuelle xR (40).

14. Parc de loisirs (1) selon l'une des revendications 9 à 13,
**caractérisé par**
des moyens de saisie de position qui saisissent la position d'au moins un exosquelette (30) dans le parc de loisirs (1) ou dans l'attraction (2).

15. Parc de loisirs (1) selon l'une des revendications 9 à 14,
**caractérisé en ce que**
au moins cet exosquelette (30) a un système de capteurs (36).

16. Application d'un exosquelette (30) pour guider un visiteur dans un parc de loisirs (1) selon l'une des revendications 9 à 15.
